# EUROPEAN PATENT APPLICATION

(11) **EP 4 844 726 A1**
(43) Date of publication of application: **25.11.2026**
(21) Application number: 26174648.1
(22) Date of filing: 27.04.2026
(51) Int. Cl.: G08G 1/042, G01S 13/04, G01S 13/56, G01S 17/04, G08G 1/04, G08G 1/14, G08G 1/048, G01S 7/40, G01S 7/497, G01S 13/931, G08G 1/065

(54) **OBJECT DETECTION SYSTEM AND OBJECT DETECTION METHOD**

(30) Priority: 23.05.2025 JP 2025086802
(71) Applicant: MITSUMI ELECTRIC CO., LTD., Tama-shi, Tokyo 206-8567 (JP)
(72) Inventor: KOGA, Nozomi, Kitasaku-gun, Nagano 389-0293 (JP); GOTO, Tsuyoshi, Kitasaku-gun, Nagano 389-0293 (JP); YAMADA, Motoharu, Kitasaku-gun, Nagano 389-0293 (JP); ZHANG, Siyu, Kitasaku-gun, Nagano 389-0293 (JP); OGIHARA, Yuji, Kitasaku-gun, Nagano 389-0293 (JP); OKIHARA, Chiaki, Kitasaku-gun, Nagano 389-0293 (JP)
(74) Representative: Winter, Brandl - Partnerschaft mbB

(57) **Abstract**

An object detection system 1 includes n sensor units 10, where n is an odd number of 3 or greater, that are provided corresponding to a predetermined area 400, detect an object 500 in the predetermined area, and output a detection result, and an information processing apparatus 20 that determines whether the object 500 is present in the predetermined area, based on the detection result. The information processing apparatus 20 includes communication unit 21 that communicates with an external device and acquires the detection result of each sensor unit 10, determination unit 22 that determines, when the number of the sensor units whose 10 detection results coincide with each other exceeds a majority of active sensor units 10, whether the object 500 is present in the predetermined area 400, based on the detection results of the sensor units 10 that exceed the majority, and outputs a determination result, and a storage unit 24 that stores the determination result.

## Description

### Technical Field

The present invention relates to an object detection system and an object detection method.

### Background Art

In recent years, a known object detection system determines whether an object is present in a predetermined area, based on a detection result of a sensor. For example, Patent Document 1 discloses a technique in which one magnetic sensor is installed on the ground in an arrangement area, and it is determined whether a vehicle is parked in the arrangement area, based on a detection result of the one magnetic sensor.

### Citation List

### Patent Literature

Patent Document 1: JP 2019-203829 A

### Summary of Invention

### Technical Problem

An object detection system representatively described in Patent Document 1 determines a parked state and an empty state of an arrangement area by using a detection result of one magnetic sensor installed in the arrangement area. Therefore, according to a demonstration experiment by the inventors of the present application, it was found that erroneous detection occurred (with a detection rate of about 98%), depending on a location where the magnetic sensor was installed, a path of the vehicle when the vehicle entered the parking lot, and an orientation of the vehicle.

The present invention has been made to solve the problems described above, and an object of the present invention is to improve the accuracy in detecting an object by an object detection system.

### Solution to Problem

An object detection system according to a representative embodiment of the present invention includes n (n being an odd number of 3 or greater) sensor units provided corresponding to a predetermined area, and configured to detect an object in the predetermined area and output a detection result, and an information processing apparatus configured to determine whether the object is present in the predetermined area, based on the detection result. The information processing apparatus includes a communication unit configured to communicate with an external device and acquire the detection result of each of the sensor units, a determination unit configured to determine, when the number of the sensor units having the detection results coinciding with each other exceeds a majority of the sensor units being active, whether the object is present in the predetermined area, based on the detection results of the sensor units, the number of the sensor units exceeding the majority, and to output a determination result, and a storage unit configured to store the determination result.

### Advantageous Effects of Invention

According to one aspect of the present invention, it is possible to improve the accuracy in detecting an object by an object detection system.

### Brief Description of Drawings

FIG. 1 is a diagram illustrating a configuration of an object detection system according to an embodiment.
FIG. 2 is a diagram illustrating an example of a parking lot having an arrangement area in which a sensor unit is installed.
FIG. 3 is a diagram illustrating an example of a hardware configuration of an information processing apparatus.
FIG. 4 is a diagram illustrating an arrangement example of the sensor units in the arrangement area.
FIG. 5 is a diagram illustrating a functional block configuration of the information processing apparatus.
FIG. 6A is a diagram for describing a parking determination method and an abnormality detection method.
FIG. 6B is a diagram for describing the parking determination method and the abnormality detection method.
FIG. 6C is a diagram for describing the parking determination method and the abnormality detection method.
FIG. 6D is a diagram for describing the parking determination method and the abnormality detection method.
FIG. 6E is a diagram for describing the parking determination method and the abnormality detection method.
FIG. 6F is a diagram for describing the parking determination method and the abnormality detection method.
FIG. 6G is a diagram for describing the parking determination method and the abnormality detection method.
FIG. 7 is a diagram illustrating a display example when information relating to a state of each arrangement area and a state of each sensor unit in a parking lot to be monitored is displayed on a screen of an information processing terminal.
FIG. 8A is a flowchart illustrating a process flow according to the parking determination method and the abnormality detection method by the information processing apparatus.
FIG. 8B is a flowchart illustrating a process flow according to the parking determination method and the abnormality detection method by the information processing apparatus.

### Description of Embodiments

### 1. Overview of Embodiments

First, an outline of a representative embodiment of the invention disclosed in the present application will be described. In the following description, as an example, reference signs in the drawings corresponding to the components of the invention are illustrated in parentheses.
[1] An object detection system (1) according to a representative embodiment of the present invention includes n sensor units (10_1 to 10_n), where n is an odd number of 3 or greater, provided corresponding to a predetermined area (400, 400_1 to 400_m), and configured to detect an object (500) in the predetermined area, and output a detection result, and an information processing apparatus (20) configured to determine whether the object is present in the predetermined area, based on the detection result, in which the information processing apparatus includes a communication unit (21) configured to communicate with an external device (10, 50) and acquire the detection result of each of the sensor units, a determination unit (22) configured to determine, when the number of the sensor units whose detection results coincide with each other exceeds a majority of the sensor units being active, whether the object is present in the predetermined area, based on the detection results of the sensor unitsthat exceed the majority, and to output a determination result, and a storage unit (24) configured to store the determination result.
[2] In the object detection system described in [1], the information processing apparatus may further include an abnormality detection unit (23) configured to detect presence or absence of an abnormality in the sensor units, and when the number of the sensor units outputting a detection result indicating that the object has been detected in the predetermined area exceeds the majority, the abnormality detection unit may store, in the storage unit, as a monitoring target, the sensor unit outputting a detection result indicating that the object has not been detected in the predetermined area.
[3] In the object detection system described in [2], in a state of the determination unit determining that the object is present in the predetermined area, when the detection result of the sensor unit being the monitoring target changes from a value indicating that the object has not been detected to a value indicating that the object has been detected, the abnormality detection unit may remove the sensor unit from the monitoring target.
[4] In the object detection system described in [2] or [3], the determination unit may not determine whether the object is present in the predetermined area, when the sensor unit being the monitoring target is present and the number of sensor units whose detection results coincide with each other among the sensor units other than the sensor unit being the monitoring target does not exceed the majority.
[5] In the object detection system described in any one of [2] to [4], when the number of the sensor units whose detection result has changed from a value indicating that the object has been detected to a value indicating that the object has not been detected exceeds the majority, the abnormality detection unit may instruct the sensor unit whose detection result has not changed from the value indicating that the object has been detected to the value indicating that the object has not been detected, to execute calibration.
[6] In the object detection system described in any one of [1] to [5], the number of the sensor units may be three (n = 3), the predetermined area may have a rectangular shape in a plan view, the three sensor units may be arranged side by side in a short side direction of the predetermined area, and adjacent ones of the sensor units may be arranged not overlapping each other at least partially in a long side direction of the predetermined area.
[7] In the object detection system described in [6], the three sensor units may be provided at positions closer to a center of the predetermined area than to two sides of the predetermined area in the long side direction.
[8] A method according to a representative embodiment of the present invention is an object detection method of determining whether an object is present in a predetermined area, based on detection results of n sensor units, where n is an odd number of 3 or greater, provided corresponding to the predetermined area and configured to detect the object in the predetermined area. The method includes a first step (S1, S2) of acquiring, by an information processing apparatus, the detection results of the sensor units, a second step (S3, S7) of determining, by the information processing apparatus, whether the number of the sensor units whose detection results coincide with each other exceeds a majority of all the sensor units, and a third step (S6, S8) of determining, when the information processing apparatus determines in the second step that the number of the sensor units whose detection results coincide with each other exceeds a majority of the sensor units being active, whether the object is present in the predetermined area, based on the detection results of the sensor units, the number of the sensor units that exceed the majority.

### 2. Specific Examples of Embodiments

Specific examples of embodiments of the present invention will be described below with reference to the drawings. In the following description, components common to the respective embodiments are denoted by the same reference signs, and repeated descriptions thereof are omitted.

### Embodiments

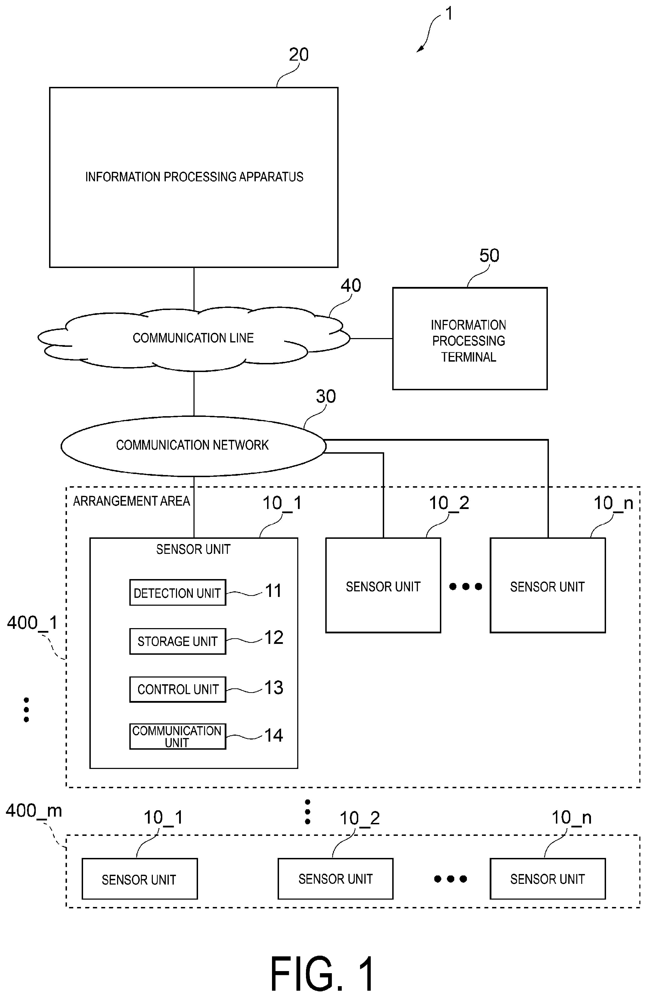

FIG. 1 is a diagram illustrating a configuration of an object detection system according to an embodiment.

An object detection system 1 is a system that detects whether an object is present in a predetermined area. In the present embodiment, as an example, the object detection system 1 is a parking detection system, the object to be detected is a vehicle, and the predetermined area is a region (hereinafter also referred to as "arrangement area") provided in a parking lot in which a vehicle can be parked.

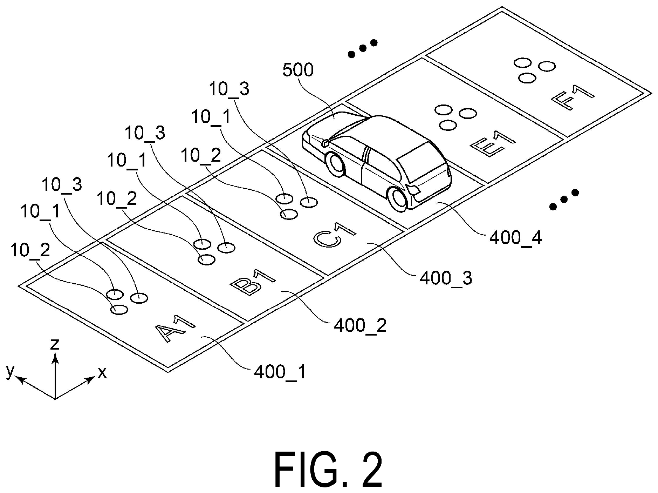

As illustrated in FIG. 1, the object detection system 1 includes a plurality of sensor units 10 and an information processing apparatus 20. FIG. 2 illustrates an installation example of the sensor units 10.

As illustrated in FIG. 2, the sensor units 10 are installed in a predetermined area, that is, in at least one arrangement area 400. For example, the sensor units 10 are provided for each of the arrangement areas 400_1 to 400_m (m being an integer of 2 or greater), detect an object in the corresponding arrangement areas 400_1 to 400_m, and output a detection result. Note that, in the following description, when the arrangement areas 400_1 to 400_m are not distinguished from each other, the arrangement areas 400_1 to 400_m are referred to as "arrangement areas 400".

In the object detection system 1, n sensor units are installed in one arrangement area 400. That is, a sensor set including n sensor units 10 as one set is installed in each of the m arrangement areas 400.

In the present embodiment, a case of three (n = 3) sensor units 10_1 to 10_3 being arranged in one arrangement area 400 will be described as an example. However, it is only required that the number n of sensor units installed in one arrangement area 400 is an odd number of 3 or more. Note that, in the following description, when the sensor units 10_1 to 10_n are not distinguished from each other, the sensor units 10_1 to 10_n may be referred to as "sensor units 10".

As illustrated in FIG. 2, the sensor units 10 are provided in the corresponding arrangement areas 400, for example. More specifically, the sensor units 10 may be provided on the ground in the corresponding arrangement areas 400. In this case, the sensor units 10 are present on the ground below the vehicle and within a predetermined distance from the vehicle.

For example, the sensor units 10 detect an object in a predetermined area (the arrangement areas 400) by at least one method among a known magnetic method and a Doppler method. The sensor units 10 are connected to the information processing apparatus 20 via a communication network (a gateway, not illustrated) 30 and a communication line (for example, an Internet line), transmit a detection result of an object in a predetermined area to the information processing apparatus 20, and receive control information and the like from the information processing apparatus 20.

Specifically, the sensor unit 10 includes a detection unit 11, a storage unit 12, a control unit 13, and a communication unit 14.

The detection unit 11 serves as a sensor that detects an object. For example, the detection unit 11 includes at least one of a known magnetic sensor and a known Doppler sensor. In the present embodiment, the detection unit 11 that is described as an example includes both a magnetic sensor and a Doppler sensor.

The magnetic sensor includes, for example, an x-direction magnetic field detection element having sensitivity for detecting a magnetic field in an x-direction (a long side direction of the vehicle), a y-direction magnetic field detection element having sensitivity for detecting a magnetic field in a y-direction (a width direction of the vehicle), and a z-direction magnetic field detection element having sensitivity for detecting a magnetic field in a z-direction (a direction perpendicular to the ground). The magnetic field detection elements of the three directions x, y, and z measure the intensity of an external magnetic field (geomagnetism), which is different between a state of no vehicle being present and a state of a vehicle being present.

The Doppler sensor transmits a radio wave (such as a microwave) having a constant frequency in a predetermined direction, receives a reflected wave of the radio wave, and measures whether a moving object is present, a traveling direction of the object, and a speed of the object, based on a change in the frequency of the reflected wave with respect to the frequency of the transmitted radio wave.

Note that the sensor included in the detection unit 11 may be any sensor capable of detecting whether an object is present, and is not limited to the magnetic sensor and the Doppler sensor.

The storage unit 12 is implemented by a storage device such as a memory, for example. In addition to data and various types of programs executed by the control unit 13, the storage unit 12 stores a detection result by the detection unit 11.

The control unit 13 is implemented by a processor such as a CPU. The control unit 13 comprehensively controls each functional unit in the sensor unit 10. The control unit 13 executes various types of processes by reading various types of programs stored in the storage unit 12 and executing the read programs. For example, the control unit 13 detects whether an object (vehicle) has been detected, and a traveling direction and speed of the object, based on the measurement result by the detection unit 11, and outputs a detection result. If an instruction from the outside or a predetermined condition is satisfied, the control unit 13 executes calibration, and resets and initializes each functional unit in the sensor unit 10.

The communication unit 14 is a functional unit used for communicating with an external device (the information processing apparatus 20). For example, the communication unit 14 is implemented by a communication circuit, an antenna, and the like corresponding to a known radio communication method. In the communication network 30, the communication unit 14 communicates with a gateway (not illustrated) via a wireless personal area network (PAN) or an IPv6 over Low power Wireless Personal Area Network (6LoWPAN), for example. The communication units 14 in the plurality of sensor units 10 also communicate with each other via the wireless PAN. When a plurality of gateways are provided, the gateways communicate with each other via a wireless LAN or a wired LAN.

The communication unit 14 transmits data to an external device (the information processing apparatus 20) via the communication network 30 in accordance with control by the control unit 13, and receives control information and the like from the external device and provides the control information and the like to the control unit 13. For example, a detection result (including measurement data) from the control unit 13 may be transmitted to the information processing apparatus 20 in real time by the communication unit 14, may be stored in the storage unit 12, and transmitted to the information processing apparatus 20 by the communication unit 14 every time a predetermined period elapses, or may be transmitted to the information processing apparatus 20 in response to a request from the information processing apparatus 20.

Here, an installation location of the sensor units 10 in the arrangement area 400 will be described.

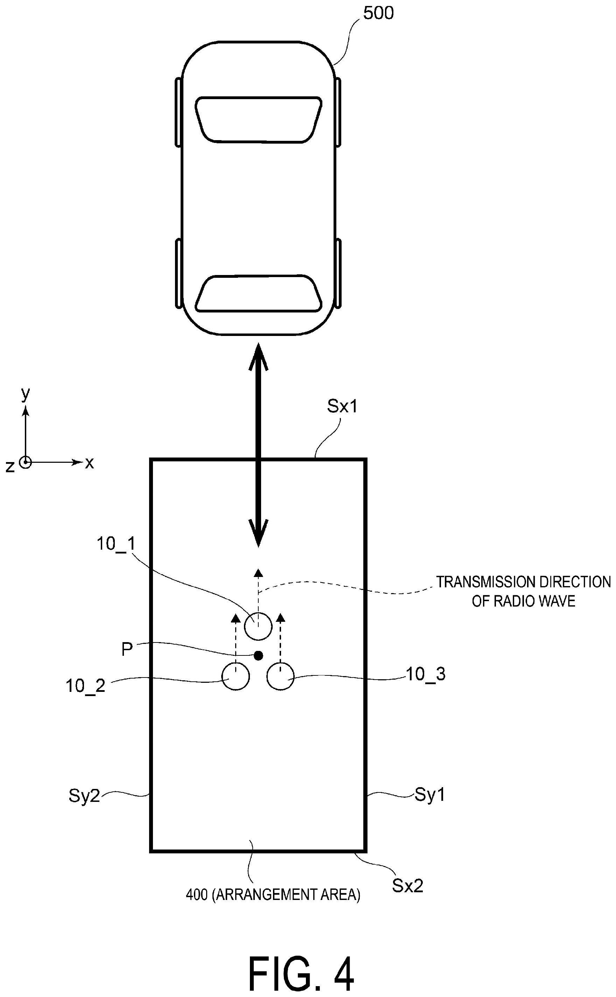

FIG. 4 is a diagram illustrating an arrangement example of the sensor units 10 in the arrangement area 400.

For example, in a parking lot, one arrangement area 400 is formed in a rectangular shape, preferably a rectangle in a plan view. For example, as illustrated in FIG. 4, the arrangement area 400 is formed so that, in an X-Y plane of a three dimensional space formed by the X-axis, the Y-axis, and the Z-axis, sides Sy1 and Sy2 in a long side direction of the arrangement area 400 are parallel to the Y-axis, and sides Sx1 and Sx2 in a short side direction of the arrangement area 400 are parallel to the X-axis. The arrangement area 400 is formed so that a vehicle enters the arrangement area 400 mainly by moving from the positive direction to the negative direction of the Y-axis, and the vehicle exits the arrangement area 400 mainly by moving from the negative direction to the positive direction of the Y-axis. That is, the arrangement area 400 is formed on the assumption that the vehicle enters or exits so as to cross the side Sx1 in the short side direction. Note that the shape of the arrangement area 400 is not limited to the above-described example, and can be appropriately changed in accordance with the area, the shape, and the like of the parking lot.

As illustrated in FIG. 4, three sensor units 10_1 to 10_3 are installed in one arrangement area 400. The sensor units 10 are preferably arranged near a center P of the arrangement area 400.

As described above, the sensor units 10 include a Doppler sensor. Therefore, each sensor unit 10 is arranged so that the direction in which a radio wave of the Doppler sensor is transmitted coincides with an entering direction and an exiting direction (mainly the Y-axis direction) of the vehicle with respect to the arrangement area 400. For example, as illustrated in FIG. 4, the three sensor units 10_1 to 10_3 are arranged side by side in the short side direction (the X-axis direction) of the arrangement area 400, and adjacent ones of the sensor units 10 are arranged so as not to overlap each other at least partially in the long side direction (the Y-axis direction) of the arrangement area 400.

The three sensor units 10_1 to 10_3 are provided at positions closer to the center P of the arrangement area 400 than the two sides Sy1 and Sy2 in the long side direction of the arrangement area 400. That is, the sensor units 10 are arranged in the arrangement area 400 so that the distances between the sensor units 10 and the center P of the arrangement area 400 are shorter than the distances between the sensor units 10 and the side Sy1 or the side Sy2 of the arrangement area 400.

The information processing apparatus 20 comprehensively controls the object detection system 1 and determines whether an object is present in a predetermined area, based on detection results of the sensor units 10. The information processing apparatus 20 communicates with an external device via the communication line 40 to transmit and receive data to and from the external device.

For example, the information processing apparatus 20 communicates with each sensor unit 10 via the communication line 40 to control an operation of each sensor unit 10 and receive various types of data indicating a detection result (measurement data), an operation state, and the like of each sensor unit 10.

For example, the information processing apparatus 20 is connected, via the communication line 40, to an information processing terminal 50 such as a personal computer, a tablet terminal, and a smartphone, which is used by a user such as a manager of the object detection system 1 serving as a parking detection system and a user of a parking lot, and can transmit and receive data to and from the information processing terminal 50 by a known communication method. For example, the information processing apparatus 20 transmits information indicating a state (parked, empty, undeterminable, and the like) of the designated arrangement area 400 or information indicating a state (normal state, abnormal state, detection result, and the like) of each sensor unit 10 installed in the arrangement area 400, to the information processing terminal 50. The information may be transmitted and received in response to a request from the information processing terminal 50 to the information processing apparatus 20, or may be transmitted and received when the information processing apparatus 20 detects that the sensor unit 10 or the like satisfies a predetermined condition, or may be transmitted and received periodically.

Here, the information processing apparatus 20 is a program processing apparatus that reads various types of programs stored in a storage device and executes the read programs, to execute various types of processes. Examples of the information processing apparatus 20 include a server, a personal computer, a tablet terminal, and a smartphone.

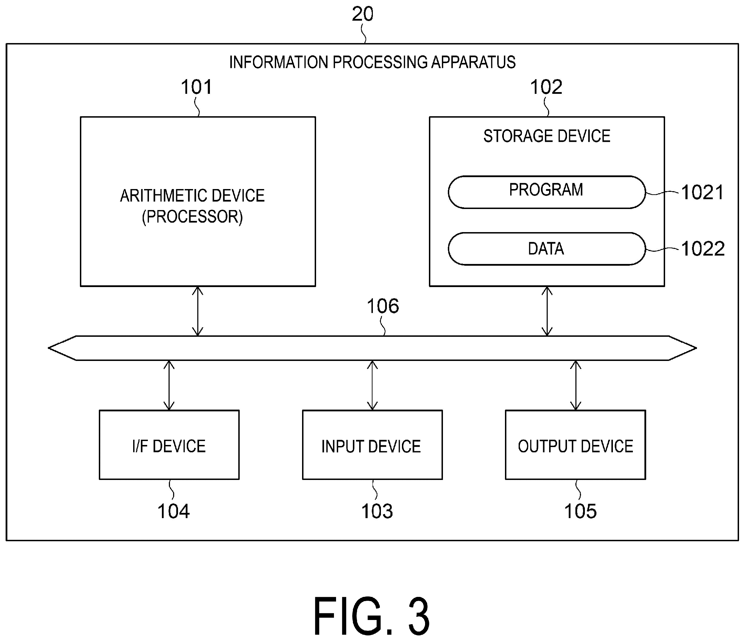

FIG. 3 is a diagram illustrating an example of a hardware configuration of the information processing apparatus 20.

As illustrated in FIG. 3, the information processing apparatus 20 includes, for example, an arithmetic device 101, a storage device 102, an input device 103, an interface (I/F) device 104, an output device 105, and a bus 106 as hardware resources.

The arithmetic device 101 is constituted by a processor such as a central processing unit (CPU) and a digital signal processor (DSP). The storage device 102 includes a storage region for storing a program 1021 that causes the arithmetic device 101 to execute various types of data processing and data 1022 utilized in the data processing by the arithmetic device 101, and is constituted by, for example, a read only memory (ROM), a random access memory (RAM), an HDD, a flash memory, or the like.

The program 1021 stored in the storage device 102 includes a program that causes a computer to function as a device that comprehensively controls the object detection system 1 and determines whether a vehicle is parked in each arrangement area 400, and is installed in the storage device 102 in advance, for example.

The data 1022 stored in the storage device 102 includes, for example, various types of parameters utilized in data processing by the arithmetic device 101, a calculation result by the arithmetic device 101, and the like.

Note that the program 1021 and the data 1022 may be circulated via a network, or may be written in a computer-readable storage medium (non-transitory computer-readable medium) such as a CD-ROM or a memory card to be circulated.

The input device 103 is a device that detects information input from the outside, and examples of the input device 103 include a keyboard, a mouse, a pointing device, a button, and a touch panel. The I/F device 104 is a device that transmits and receives data to and from the outside, and is constituted by a communication control circuit, an input/output port, an antenna, and the like used for performing communication by a wire or by radio, for example.

The output device 105 is a device that outputs information and the like obtained by data processing by the arithmetic device 101. Examples of the output device 105 include an external storage device such as an SSD and an HDD, a display device such as a liquid crystal display (LCD) and an organic electroluminescence (EL) display, and a known communication device that transmits and receives data to and from an external device. The bus 106 connects the arithmetic device 101, the storage device 102, the input device 103, the I/F device 104, and the output device 105 with each other, so that data can be transmitted and received between these devices.

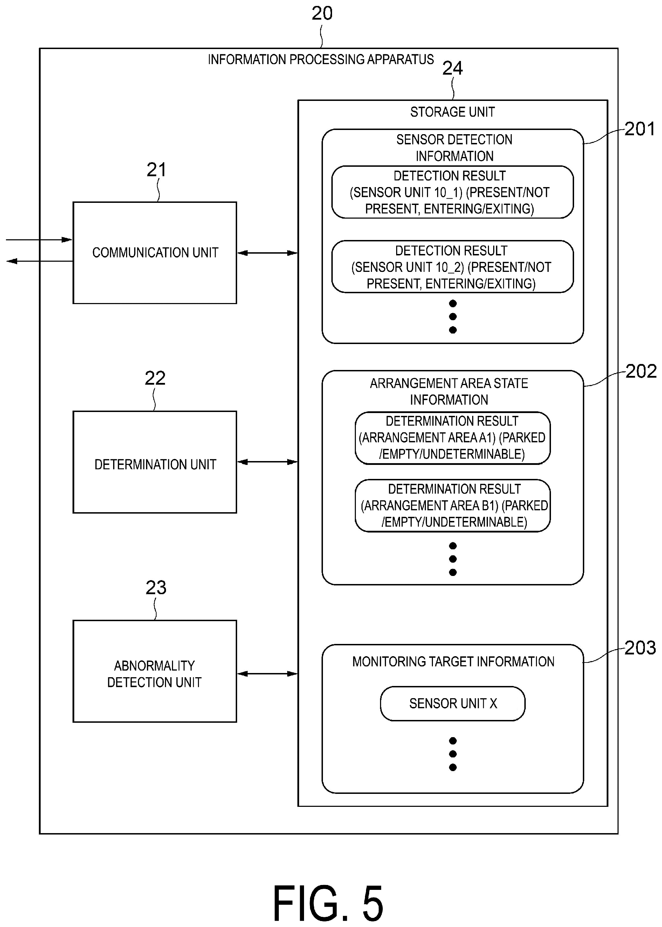

FIG. 5 is a diagram illustrating a functional block configuration of the information processing apparatus 20.

As illustrated in FIG. 5, the information processing apparatus 20 includes a communication unit 21, a determination unit 22, an abnormality detection unit 23, and a storage unit 24, as functional blocks for implementing a function of comprehensively controlling the object detection system 1 and a function of determining whether an object is present in a predetermined area, based on a detection result of the sensor units 10. These functional blocks are realized when hardware resources constituting the information processing apparatus 20 illustrated in FIG. 3 work together with software (the program 1021) installed in the information processing apparatus 20. That is, in the information processing apparatus 20, the arithmetic device 101 executes an arithmetic operation in accordance with the program 1021 stored in the storage device 102, to control the storage device 102, the input device 103, the I/F device 104, the output device 105, and the bus 106, and thus, the functional blocks (the communication unit 21, the determination unit 22, the abnormality detection unit 23, and the storage unit 24) of the information processing apparatus 20 illustrated in FIG. 4 are realized.

The communication unit 21 is a functional unit that communicates with an external device to transmit and receive data. The communication unit 21 acquires a detection result of each sensor unit 10 via the communication line 40 and stores the detection result in the storage unit 24 as sensor detection information 201. The communication unit 21 reads a determination result of an arrangement area, which will be described later, information indicating an operation state of each sensor unit 10, and the like, from the storage unit 24 via the communication line 40, and transmits the determination result, the information, and the like to the information processing terminal 50. Furthermore, when the abnormality detection unit 23, which will be described later, instructs a specific sensor unit 10 to execute calibration, the communication unit 21 transmits, via the communication line 40, control information for instructing the specific sensor unit 10 to execute calibration. The sensor unit 10 instructed to execute calibration performs initialization in which the detection result is changed from a value indicating that the object has been detected (detected) to a value indicating that the object has not been detected (not detected). For example, in the sensor unit 10, the control unit 13 initializes internal parameters stored in the storage unit 12 and utilized for parking determination.

The storage unit 24 is a functional unit that stores various types of data such as data of the comprehensive control by the information processing apparatus 20 and a determination result of a parking situation of the vehicle in the arrangement area 400. For example, the storage unit 24 stores sensor detection information 201 including a detection result of each sensor unit 10, arrangement area state information 202 including a determination result of the parking situation of the vehicle in each arrangement area 400 of a management target, and monitoring target information 203 including identification information of the sensor unit 10 which is highly likely to be in an abnormal state and is recognized as a monitoring target.

The determination unit 22 is a functional unit that determines whether an object is present in a predetermined area. That is, the determination unit 22 determines whether a vehicle 500 is parked in the arrangement area 400. Specifically, when the number of sensor units 10 having detection results (detected/not detected) that coincide with each other among the n sensor units 10 arranged in the predetermined area that is the determination target exceeds a majority of active sensor units 10, the determination unit 22 determines whether an object is present in the predetermined area, based on the detection results of the sensor units 10 that exceed the majority, and outputs a determination result ("parked" or "empty").

Here, among the sensor units 10_1 to 10_n installed in the predetermined area (the arrangement area 400), the active sensor units 10 refer to the sensor units 10 excluding the sensor unit 10 recognized as a monitoring target, which will be described later, and the sensor unit 10 that is not operating due to certain circumstances. For example, when one sensor unit 10 among five sensor units 10 is not operating or is recognized as a monitoring target, the remaining four sensor units 10 serve as active sensor units 10. In this case, the majority is "3".

When a sensor unit 10 is recognized as a monitoring target and the number of sensor units 10 having the detection results coinciding with each other among the sensor units 10 other than the monitoring target does not exceed the majority (n/2), the determination unit 22 does not determine whether an object is present in the arrangement area 400. That is, the determination unit 22 determines "undeterminable" as the determination result.

The determination unit 22 stores a determination result of each of the arrangement areas 400_1 to 400_m (predetermined areas) in the storage unit 24 as the arrangement area state information 202.

The abnormality detection unit 23 is a functional unit that detects presence or absence of an abnormality in the sensor units 10. When the number of sensor units 10 that output a detection result indicating that an object has been detected in the arrangement area 400 exceeds a majority of all the sensor units 10, the abnormality detection unit 23 stores, in the storage unit 24, as a monitoring target, the sensor unit 10 outputting a detection result indicating that no object has been detected in the arrangement area 400. For example, the abnormality detection unit 23 stores identification information of a sensor unit X that is a monitoring target, as the monitoring target information 203 in the storage unit 24.

When the determination unit 22 determines that an object is present in the arrangement area 400, in a case of the detection result of the sensor unit 10 of a monitoring target Ma changing from a value (not detected) indicating that no object has been detected to a value (detected) indicating that the object has been detected, the abnormality detection unit 23 removes the sensor unit 10 from the monitoring target.

Furthermore, when the number of sensor units 10 whose detection result has changed from the value (detected) indicating that an object has been detected to the value (not detected) indicating that no object has been detected exceeds a majority of all the sensor units 10, the abnormality detection unit 23 instructs the sensor unit 10 whose detection result has not changed from the value (detected) indicating that an object has been detected to the value (not detected) indicating that no object has been detected, to execute calibration.

Next, a parking determination method by the determination unit 22 and an abnormality detection method by the abnormality detection unit 23 will be specifically described.

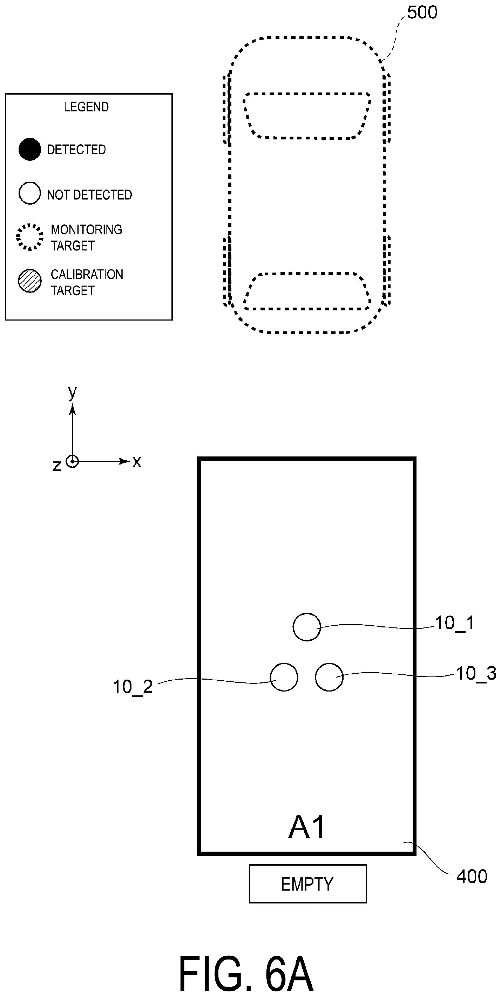

FIGS. 6A to 6G are diagrams for describing the parking determination method and the abnormality detection method.

FIG. 6A illustrates a state of the vehicle 500 being not stopped in the one arrangement area 400. In this state, as illustrated in FIG. 6A, when the three sensor units 10_1 to 10_3 installed in the arrangement area 400 each output a detection result indicating that no object has been detected, the determination results (not detected) of more than the majority of the sensor units 10 coincide with each other, and thus, the determination unit 22 determines that the state of the arrangement area 400 is "empty". At this time, the abnormality detection unit 23 does not determine that an abnormality has occurred in the sensor units 10.

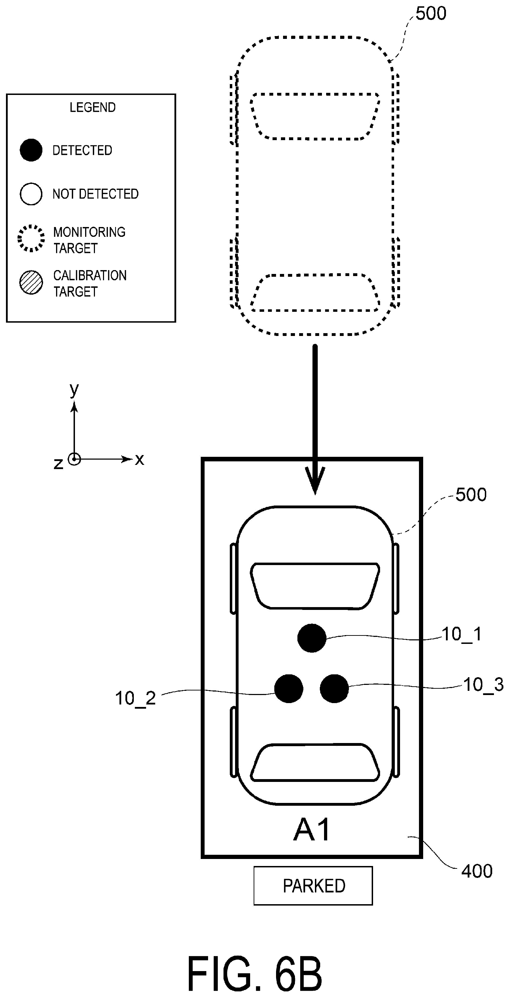

FIG. 6B illustrates a state in which the vehicle 500 enters the one arrangement area 400 and is stopped. In this state, as illustrated in FIG. 6B, when the three sensor units 10_1 to 10_3 installed in the arrangement area 400 each output a detection result indicating that an object has been detected, the determination results (detected) of more than the majority of the sensor units 10 coincide with each other, and thus, the determination unit 22 determines that the state of the arrangement area 400 is "parked". At this time, the abnormality detection unit 23 does not determine that an abnormality has occurred in the sensor units 10.

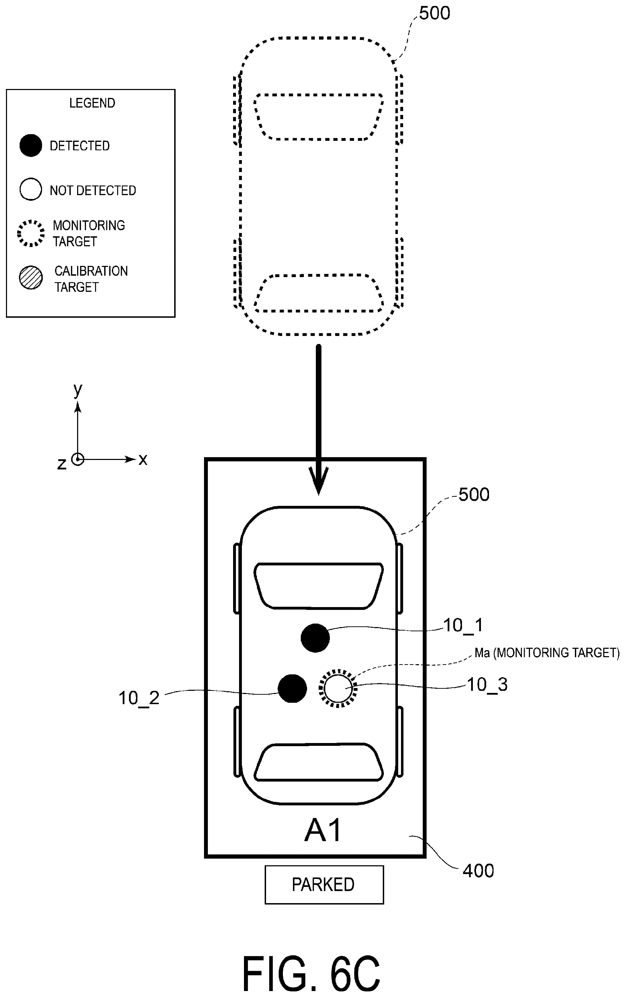

FIG. 6C illustrates a state in which the vehicle 500 enters the one arrangement area 400 and is stopped. In this state, as illustrated in FIG. 6C, among the three sensor units 10_1 to 10_3 installed in the arrangement area 400, the sensor units 10_1 and 10_2 output a detection result indicating that an object has been detected, while the sensor unit 10_3 outputs a detection result indicating that no object has been detected. Therefore, the abnormality detection unit 23 recognizes the sensor unit 10_3 as the monitoring target Ma, and stores identification information of the sensor unit 10_3 as the monitoring target information 203 in the storage unit 24.

On the other hand, more than the majority of the three sensor units 10_1 to 10_3, that is, the sensor units 10_1 and 10_2, output a detection result indicating that an object has been detected, and thus, the determination unit 22 determines that the state of the arrangement area 400 is "parked".

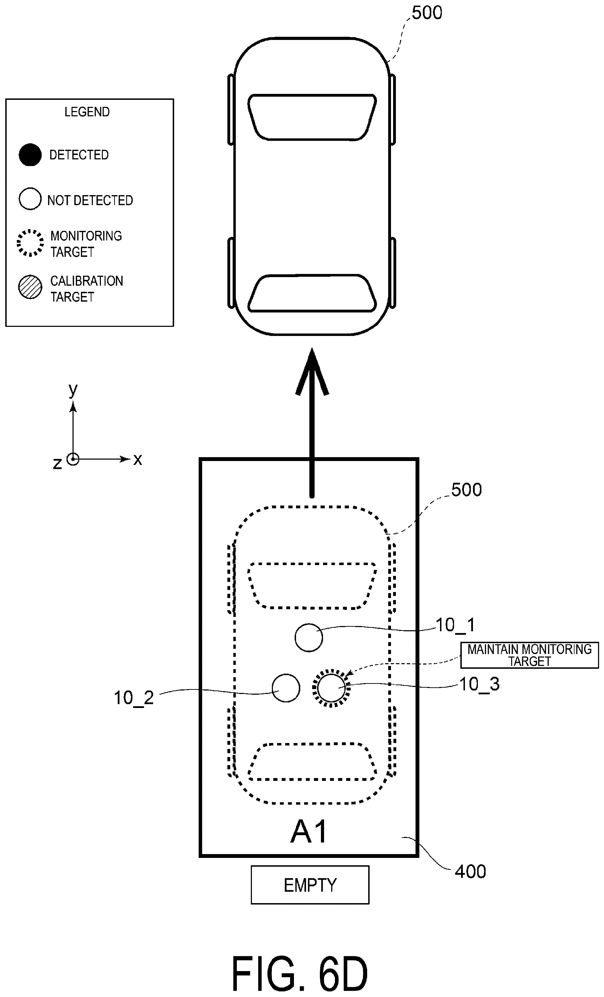

FIG. 6D illustrates a case in which the state illustrated in FIG. 6C transitions to a state in which the vehicle 500 has exited the arrangement area 400. In this case, the determination unit 22 determines the state of the arrangement area 400, based on the detection results of the sensor units 10_1 and 10_2 other than the sensor unit 10_3 recognized as the monitoring target Ma. For example, as illustrated in FIG. 6D, it is assumed that the sensor units 10_1 and 10_2 other than the sensor unit 10_3 recognized as the monitoring target Ma each output a detection result indicating that no object has been detected. In this case, the determination results (not detected) of the sensor units 10_1 and 10_2 exceeding the majority other than the sensor unit 10_3 coincide, and thus, the determination unit 22 determines that the state of the arrangement area 400 is "empty". At this time, the abnormality detection unit 23 continues to set the sensor unit 10_3 as the monitoring target Ma.

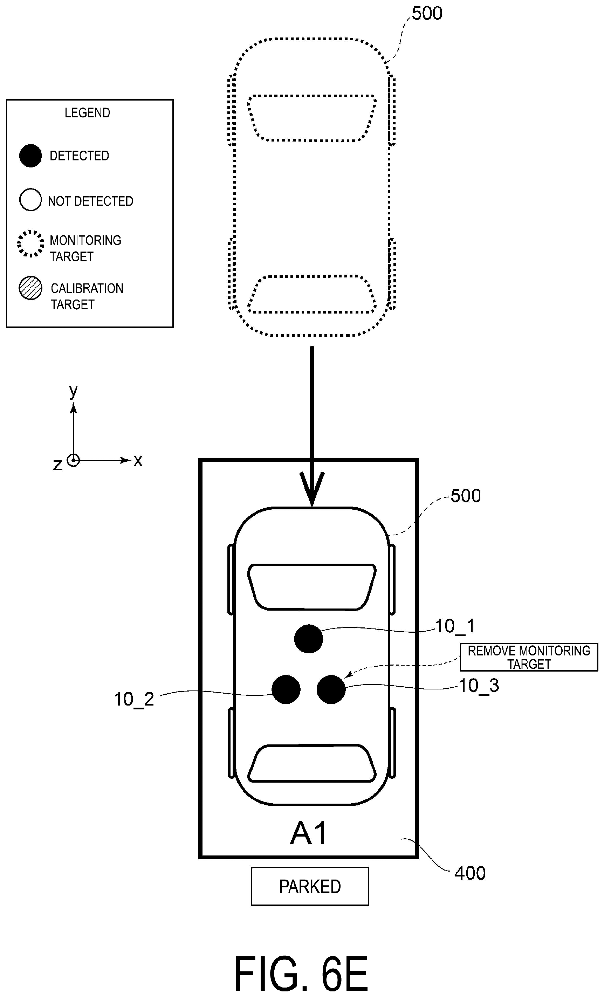

FIG. 6E illustrates a case in which the state illustrated in FIG. 6D transitions to a state in which the vehicle 500 has entered the arrangement area 400. As illustrated in FIG. 6E, it is assumed that the vehicle 500 enters the arrangement area 400, and then, the three sensor units 10_1 to 10_3 installed in the arrangement area 400 each output a detection result indicating that an object has been detected. In this case, the determination results (detected) of the sensor units 10_1 and 10_2 exceeding the majority excluding the monitoring target Ma coincide, and thus, the determination unit 22 determines that the state of the arrangement area 400 is "parked".

On the other hand, the detection result of the sensor unit 10_3 recognized as the monitoring target Ma changes from "not detected" to "detected", and thus, the abnormality detection unit 23 removes the sensor unit 10_3 from the monitoring target. That is, the abnormality detection unit 23 deletes the information indicating the sensor unit 10_3 from the monitoring target information 203 stored in the storage unit 24.

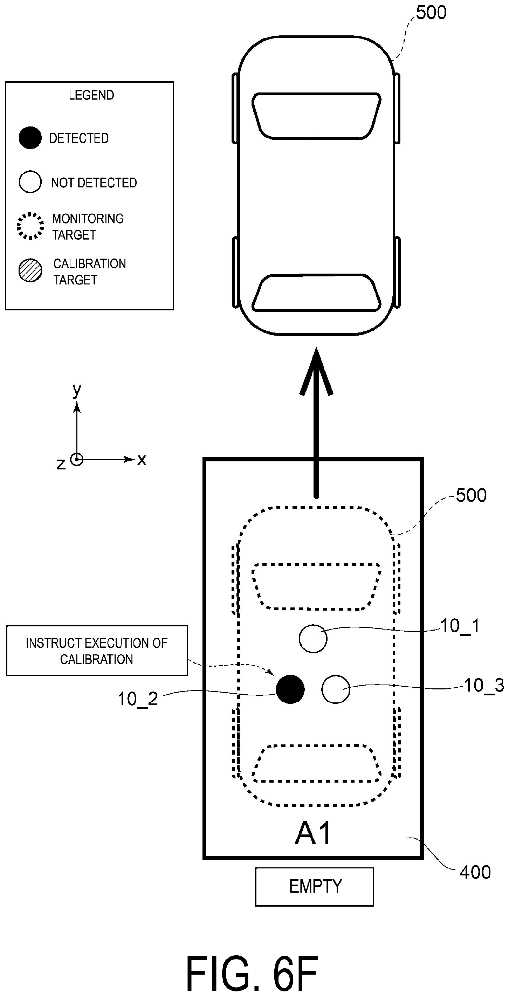

FIG. 6F illustrates a case in which the state illustrated in FIG. 6B transitions to a state in which the vehicle 500 has exited the arrangement area 400. In this case, as illustrated in FIG. 6F, it is assumed that the sensor units 10_1 and 10_3 among the three sensor units 10_1 to 10_3 installed in the arrangement area 400 each output a detection result indicating that no object has been detected. In this case, the determination results (not detected) of more than the majority of the sensor units 10 coincide with each other, and thus, the determination unit 22 determines that the state of the arrangement area 400 is "empty".

On the other hand, as illustrated in FIG. 6F, even though the vehicle 500 has exited the arrangement area 400, the sensor unit 10_2 outputs a detection result indicating that the object has been detected, and thus, the abnormality detection unit 23 instructs the sensor unit 10_2 to execute calibration, via the communication unit 21. For example, the communication unit 21 transmits, to the sensor unit 10_2, control information for instructing the sensor unit 10_2 to execute calibration.

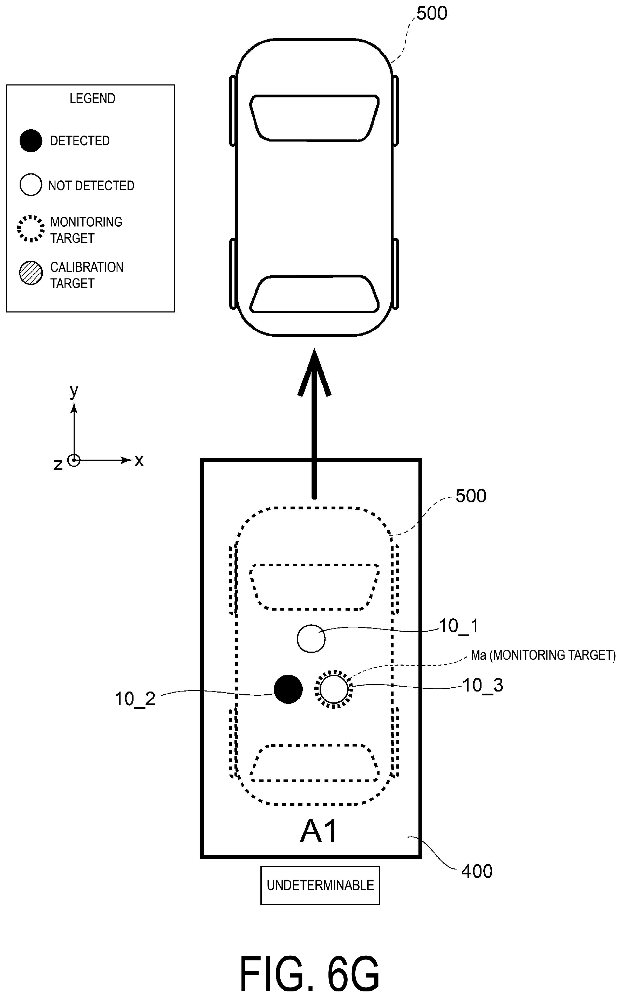

FIG. 6G illustrates a case in which the state illustrated in FIG. 6C transitions to a state in which the vehicle 500 has exited the arrangement area 400. In this case, the determination unit 22 determines the state of the arrangement area 400, based on the detection results of the sensor units 10_1 and 10_2 other than the sensor unit 10_3 recognized as the monitoring target Ma. For example, as illustrated in FIG. 6G, when the determination results of the sensor units 10_1 and 10_2 other than the sensor unit 10_3 do not coincide, that is, when it is not possible to perform determination by the majority, the determination unit 22 recognizes the state of the arrangement area 400 as "undeterminable".

Note that the information processing terminal 50 can acquire, via the communication line 40, information about the state of each sensor unit 10 (the sensor detection information 201), information about the state of each arrangement area 400 (the arrangement area state information 202), and information about the sensor unit 10 serving as the monitoring target (the monitoring target information 203), which are determined by the information processing apparatus 20.

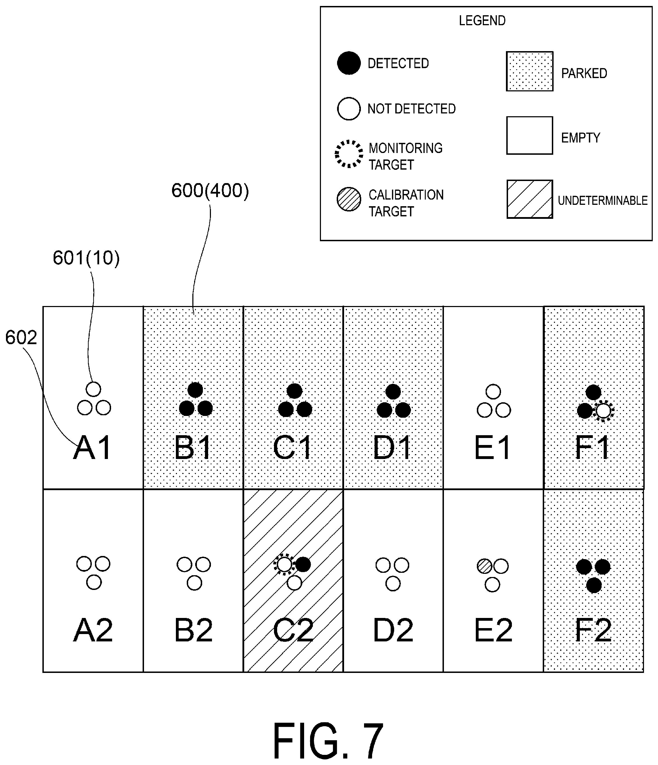

FIG. 7 is a diagram illustrating a display example when information relating to a state of each arrangement area 400 and a state of each sensor unit 10 in a parking lot to be monitored is displayed on a screen of the information processing terminal 50.

For example, as illustrated in FIG. 7, an icon 600 generally representing a parking slot (the arrangement area 400) in a parking lot serving as a management target is displayed on the screen of the information processing terminal 50 used by a manager of the parking lot, and an icon 601 generally representing the sensor units 10_1 to 10_3 and identification information 602 of the parking slot are displayed in the icon 600.

The icon 600 representing the parking slot is displayed in different colors, patterns, and the like, in accordance with the state of the corresponding arrangement area 400 (for example, parked, empty, and undeterminable), as illustrated in the legend in FIG. 7, for example.

The icon 601 representing the sensor unit 10 is displayed in different colors, patterns, and the like, in accordance with a state (for example, detected, not detected, monitoring target, and calibration target) of the corresponding sensor unit 10, as illustrated in the legend in FIG. 7, for example.

When the information as illustrated in FIG. 7 is displayed on the screen of the information processing terminal 50, the manager or the like of the parking lot can easily grasp the state of each parking slot and the state of each sensor unit 10.

Next, a process flow according to the parking determination method and the abnormality detection method by the information processing apparatus 20 will be described.

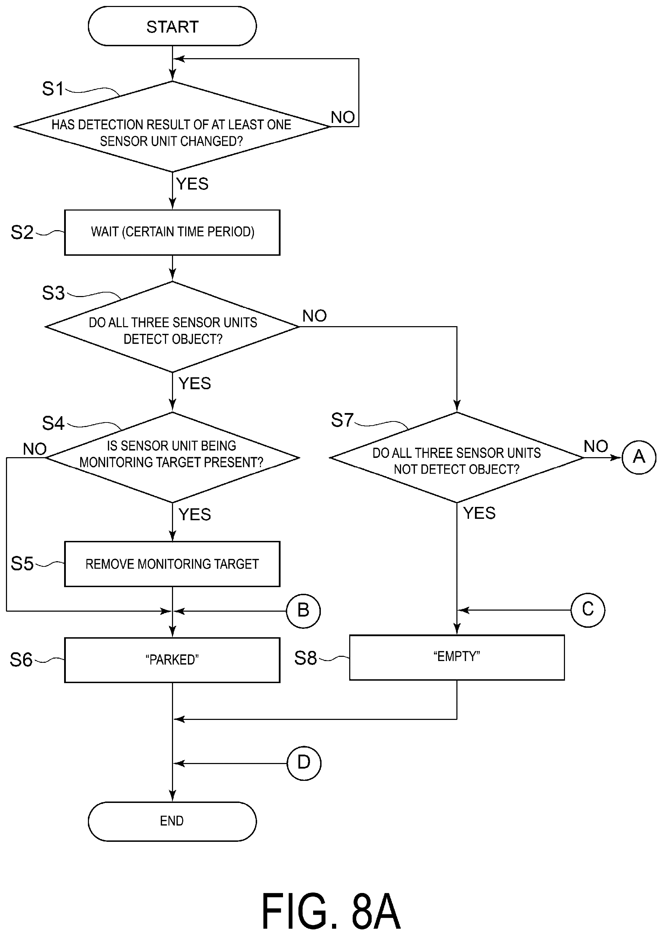

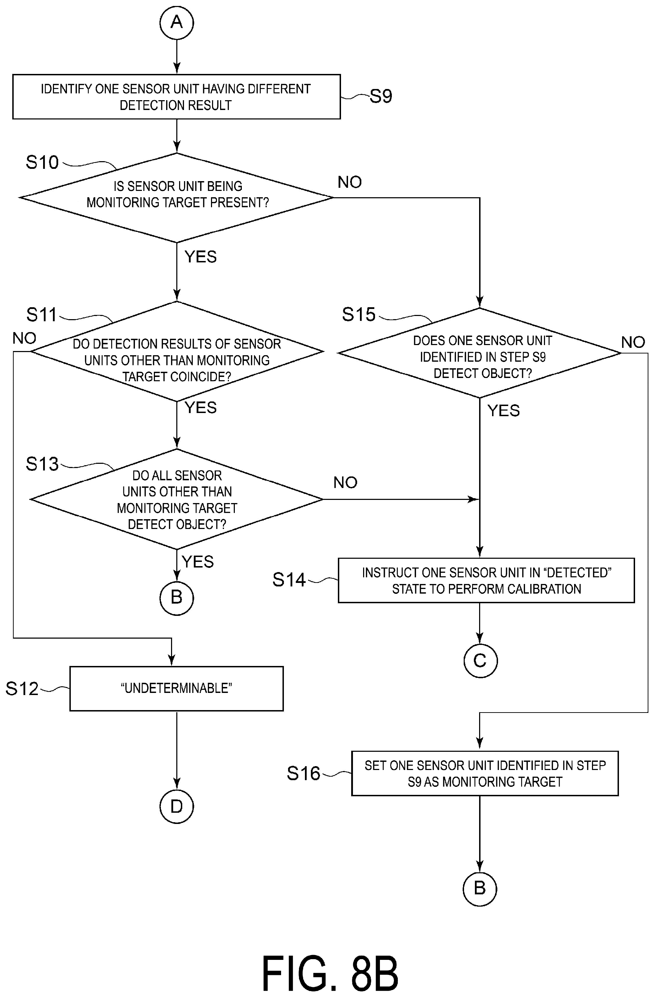

FIGS. 8A and 8B are flowcharts illustrating a process flow according to the parking determination method and the abnormality detection method by the information processing apparatus 20.

Here, a process flow according to the parking determination method and the abnormality detection method by the information processing apparatus 20 will be described by using a case in which the three sensor units 10_1 to 10_3 are arranged in the arrangement area 400_1 of a parking lot as an example.

First, the information processing apparatus 20 determines whether the detection result of the sensor unit 10 provided in the arrangement area 400_1 has changed (step S1). Specifically, the determination unit 22 determines whether the detection result of at least one sensor unit 10 among the three sensor units 10_1 to 10_3 has changed (step S1). If there is no change (step S1: NO), the information processing apparatus 20 continues to monitor the state of each sensor unit 10.

On the other hand, if the detection result of at least one sensor unit 10 has changed (step S1: YES), the information processing apparatus 20 waits during a certain time period (step S2). For example, after detecting that the detection result of at least one sensor unit 10 has changed, the determination unit 22 waits during a time period set in advance.

After the certain time period has elapsed, the information processing apparatus 20 determines whether all the sensor units 10 in the arrangement area 400_1 detect the object (step S3). Specifically, the determination unit 22 determines whether all of the detection results of the three sensor units 10_1 to 10_3 in the arrangement area 400_1 indicate "detected". When the detection results of all the sensor units 10_1 to 10_3 indicate "detected" (step S3: YES), the information processing apparatus 20 determines whether the sensor unit X that is the monitoring target is present (step S4). Specifically, the abnormality detection unit 23 refers to the monitoring target information 203 stored in the storage unit 24, and determines whether information of the sensor unit that is the monitoring target is present.

When the sensor unit X that is the monitoring target is present (step S4: YES), the information processing apparatus 20 removes the sensor unit X from the monitoring target (step S5). Specifically, the abnormality detection unit 23 deletes the information of the sensor unit X from the monitoring target information 203 stored in the storage unit 24.

Afterwards, the information processing apparatus 20 sets the state of the arrangement area 400_1 to "parked" (step S6). Specifically, the determination unit 22 sets the determination result of the arrangement area 400_1 in the arrangement area state information 202 stored in the storage unit 24 to "parked", and updates the arrangement area state information 202.

In step S3, when not all the detection results of the sensor units 10_1 to 10_3 are "detected" (step S3: NO), the information processing apparatus 20 determines whether all the sensor units 10_1 to 10_3 detect an object (step S7). Specifically, the determination unit 22 determines whether all of the detection results of the three sensor units 10_1 to 10_3 in the arrangement area 400_1 are "not detected". When the detection results of all the sensor units 10_1 to 10_3 are "not detected" (step S7: YES), the information processing apparatus 20 sets the state of the arrangement area 400_1 to "empty" (step S8). Specifically, the determination unit 22 sets the determination result of the arrangement area 400_1 in the arrangement area state information 202 stored in the storage unit 24 to "empty", and updates the arrangement area state information 202.

On the other hand, when not all the detection results of the sensor units 10_1 to 10_3 are "not detected" (step S7: NO), the information processing apparatus 20 identifies one sensor unit having the detection result different from those of the other sensor units among the sensor units 10_1 to 10_3 (step S9).

Next, the information processing apparatus 20 determines whether the sensor unit X that is the monitoring target is present (step S10). Specifically, the abnormality detection unit 23 refers to the monitoring target information 203 stored in the storage unit 24, and determines whether information of the sensor unit X that is the monitoring target is present.

When the sensor unit X that is a monitoring target is present (step S10: YES), the information processing apparatus 20 determines whether the detection results of the sensor units 10 other than the monitoring target coincide (step S11). For example, when the sensor unit 10_3 is the monitoring target, the determination unit 22 determines whether the detection result of the sensor unit 10_1 and the detection result of the sensor unit 10_2 coincide.

When the detection results of the sensor units 10 other than the monitoring target do not coincide (step S11: NO), the information processing apparatus 20 sets the arrangement area 400_1 to "undeterminable" (step S12). Specifically, the determination unit 22 sets the determination result of the arrangement area 400_1 in the arrangement area state information 202 stored in the storage unit 24 to "undeterminable", and updates the arrangement area state information 202.

When the detection results of the sensor units 10 other than the monitoring target coincide (step S11: YES), the information processing apparatus 20 determines whether all the sensor units 10 other than the monitoring target detect the object (step S13). Specifically, the determination unit 22 determines whether the detection results of the two sensor units 10 other than the monitoring target in the arrangement area 400_1 are both "detected". When the detection results of the two sensor units 10 other than the monitoring target are both "detected" (step S13: YES), the information processing apparatus 20 sets the state of the arrangement area 400_1 to "parked" (step S6).

On the other hand, when the detection results of the two sensor units 10 other than the monitoring target are both not "detected" (step S13: NO), that is, when the detection results of the two sensor units 10 other than the monitoring target are both "not detected", the information processing apparatus 20 instructs the sensor unit in the "detected" state to perform calibration (step S14). Specifically, the communication unit 21 transmits, to the sensor unit in the "detected" state, control information for instructing the sensor unit to execute calibration. The information processing apparatus 20 sets the state of the arrangement area 400_1 to "empty" (step S8).

In step S10, when the sensor unit X serving as the monitoring target is not present (step S10: NO), the information processing apparatus 20 determines whether the one sensor unit 10 identified in step S9 detects an object (step S15). Specifically, the determination unit 22 determines whether the detection result of the one sensor unit 10 identified in step S9 is "detected".

When the one sensor unit 10 identified in step S9 detects an object (step S15: YES), the information processing apparatus 20 instructs the sensor unit in the "detected" state to perform calibration (step S14). The information processing apparatus 20 sets the state of the arrangement area 400_1 to "empty" (step S8).

On the other hand, when the one sensor unit 10 identified in step S9 does not detect an object (step S15: NO), the information processing apparatus 20 sets the one sensor unit 10 identified in step S9, as a monitoring target (step S16). The information processing apparatus 20 sets the state of the arrangement area 400_1 to "parked" (step S6).

The information processing apparatus 20 uses the above-described procedure to execute a process according to the parking determination and the abnormality detection.

As described above, the object detection system 1 according to the embodiment includes n (n being an odd number of 3 or greater) sensor units 10 that are provided corresponding to a predetermined area (the arrangement area 400), detect an object (for example, the vehicle 500) in the predetermined area, and output a detection result, and the information processing apparatus 20 that determines whether an object is present in the predetermined area, based on the detection results of the sensor units 10. When the number of sensor units 10 having detection results that coincide with each other exceeds a majority of active sensor units 10, the information processing apparatus 20 determines whether an object is present in the predetermined area, based on the detection results of the sensor units 10, the number of the sensor units 10 exceeding the majority.

According to the above, even when the detection in some of the sensor units 10 is erroneous, it is possible to determine whether an object is present in the arrangement area, based on the detection results of the other sensor units 10. Therefore, it is possible to improve the accuracy in detecting an object, compared to a case in which the determination of whether an object is present is based on the detection result of one magnetic sensor as in the related art.

In the object detection system 1 according to the embodiment, when the number of sensor units 10 outputting a detection result indicating that the object has been detected in the predetermined area exceeds the majority, the information processing apparatus 20 stores, as the monitoring target, the sensor unit 10 that outputs a detection result indicating that no object has been detected in the predetermined area.

According to the above, in a situation in which an object is very likely to be present in the predetermined area, when a sensor unit not detecting an object is present, it is very likely that an abnormality has occurred in the sensor unit. In such a case, the object detection system 1 stores the sensor unit in which an abnormality is likely to occur, as a monitoring target, and thus, a manager or the like of the object detection system 1 can observe the sensor unit and easily consider a future response and the like.

In the object detection system 1, in a state in which it is determined that an object is present in the predetermined area, when the detection result of the sensor unit 10 that is the monitoring target changes from a value indicating that no object has been detected to a value indicating that the object has been detected, the information processing apparatus 20 removes the sensor unit 10 from the monitoring target.

When the sensor unit that is the monitoring target detects an object in a situation in which an object is very likely to be present in the predetermined area, it is very likely that the erroneous detection by the sensor unit immediately before is primary and the sensor unit is presently operating normally. In such a case, the object detection system 1 removes the sensor unit that is likely to be operating normally from the monitoring target, and thus, the manager or the like does not need to continuously observe the sensor units.

In the object detection system 1, when the sensor unit 10 that is the monitoring target is present and the number of sensor units 10 having detection results that coincide with each other among the sensor units 10 other than the sensor unit 10 being the monitoring target does not exceed the majority, the information processing apparatus 20 does not determine whether an object is present in the predetermined area.

According to the above, it is possible to prevent an uncertain determination result from being output in a situation in which the sensor unit 10 operating normally cannot be appropriately identified.

In the object detection system 1, when the number of sensor units 10 having the detection result having changed from a value indicating that an object has been detected to a value indicating that no object has been detected exceeds a majority of active sensor units 10, the information processing apparatus 20 instructs the sensor unit 10 having the detection result having not changed from the value indicating that an object has been detected to the value indicating that no object has been detected, to execute calibration.

According to the above, in a situation in which the object is very likely not to be present, it is very likely that the sensor unit 10 outputting a detection result indicating that an object has been detected has a malfunction. In such a case, the object detection system 1 can cause the sensor unit 10 that likely has a malfunction to execute calibration, and reset and restart the sensor unit 10. This makes it possible to return the sensor unit 10 to a normal state.

In the object detection system 1 according to the embodiment, the three sensor units 10_1 to 10_3 are provided in a predetermined area (the arrangement area 400) having a rectangular shape in a plan view. The three sensor units 10_1 to 10_3 are arranged side by side in the short side direction of the predetermined area, and the adjacent sensor units are arranged so as not to overlap each other at least partially in the long side direction of the predetermined area.

According to the above, when each sensor unit includes a Doppler sensor or the like, a radio wave output from the sensor and a reflected wave of the radio wave are less likely to interfere with a radio wave of an adjacent sensor. Therefore, it is possible to reduce the possibility that the detection in each sensor unit is erroneous, due to a path of the vehicle when the vehicle enters the parking space or an orientation of the vehicle, and it is possible to further improve the detection accuracy for the object.

In the object detection system 1, the three sensor units are provided at positions closer to the center P of the predetermined area than the two sides Sy1 and Sy2 of the predetermined area in the long side direction.

According to the above, the sensor unit 10 can be arranged sufficiently separated from an area adjacent to the predetermined area. Therefore, it is possible to reduce the possibility that the detection in the sensor unit is erroneous, when an object enters or exits the adjacent area, and it is possible to further improve the detection accuracy for the object.

### Expansion of Embodiments

The invention made by the present inventor has been specifically described above based on the embodiments, but the present invention is not limited to the embodiments, and it goes without saying that the present invention can be changed in various ways within the scope not departing from the gist of the present invention.

For example, in the above-described embodiment, the configuration and the operation of the object detection system 1 have been described by using, as an example, a case in which an object serving as a detection target of the object detection system 1 is a vehicle. However, the embodiment is not limited to this case. The detection target of the object detection system 1 may be an object other than a vehicle, for example, a product in a manufacturing line, or a living being such as a person and an animal.

The information processing apparatus 20 is not limited to a case in which the information processing apparatus 20 is realized by one program processing apparatus (computer) as described above. The information processing apparatus 20 may be realized by a plurality of program processing apparatuses connected to each other via a known communication network or the like. A hardware configuration of the information processing apparatus 20 is not particularly limited.

The flowchart described above is an example and is not limited to this example. For example, another process may be inserted between steps and processes may be executed in parallel.

### Reference Signs List

1 Object detection system, 10, 10_1 to 10_n Sensor unit, 11 Detection unit, 12 Storage unit, 13 Control unit, 14 Communication unit, 21 Communication unit, 22 Determination unit, 23 Abnormality detection unit, 24 Storage unit, 201 Sensor detection information, 202 Arrangement area state information, 203 Monitoring target information, 400, 400_1 to 400_m Predetermined area (arrangement area), 500 Object (vehicle), Sy1, Sy2 Side of arrangement area 400 in Y-axis direction, Sx1, Sx2 Side of arrangement area 400 in X-axis direction, 20 Information processing apparatus, 30 Communication network, 40 Communication line, Ma Monitoring target, P Center of arrangement area.

## Claims

1. An object detection system, comprising:
n sensor units, where n is an odd number of 3 or greater, provided corresponding to a predetermined area, and configured to detect an object in the predetermined area and output a detection result; and
an information processing apparatus configured to determine whether the object is present in the predetermined area, based on the detection result, wherein
the information processing apparatus includes:
a communication unit configured to communicate with an external device and acquire the detection result of each of the sensor units;
a determination unit configured to determine, when the number of the sensor units whose detection results coincide with each other exceeds a majority of the sensor units being active, whether the object is present in the predetermined area, based on the detection results of the sensor units that exceed the majority, and to output a determination result; and
a storage unit configured to store the determination result.

2. The object detection system according to claim 1, wherein
the information processing apparatus further includes:
an abnormality detection unit configured to detect presence or absence of an abnormality in the sensor units, and
when the number of the sensor units outputting a detection result indicating that the object has been detected in the predetermined area exceeds the majority, the abnormality detection unit stores, in the storage unit, as a monitoring target, the sensor unit outputting a detection result indicating that the object has not been detected in the predetermined area.

3. The object detection system according to claim 2, wherein
in a state of the determination unit determining that the object is present in the predetermined area, when the detection result of the sensor unit being the monitoring target changes from a value indicating that the object has not been detected to a value indicating that the object has been detected, the abnormality detection unit removes the sensor unit from the monitoring target.

4. The object detection system according to claim 2, wherein
the determination unit does not determine whether the object is present in the predetermined area, when the sensor unit being the monitoring target is present and the number of the sensor units whose detection results coincide with each other among the sensor units other than the sensor unit being the monitoring target does not exceed the majority.

5. The object detection system according to claim 2, wherein
when the number of the sensor units whose detection result has changed from a value indicating that the object has been detected to a value indicating that the object has not been detected exceeds the majority, the abnormality detection unit instructs the sensor unit whose detection result has not changed from the value indicating that the object has been detected to the value indicating that the object has not been detected, to execute calibration.

6. The object detection system according to claim 1, wherein
the number of the sensor units is three (n = 3),
the predetermined area has a rectangular shape in a plan view, and
the three sensor units are arranged side by side in a short side direction of the predetermined area, and adjacent ones of the sensor units do not overlap each other at least partially in a long side direction of the predetermined area.

7. The object detection system according to claim 6, wherein
the three sensor units are provided at positions closer to a center of the predetermined area than to two sides of the predetermined area in the long side direction.

8. An object detection method of determining whether an object is present in a predetermined area, based on detection results of n sensor units, where n is an odd number of 3 or greater, provided corresponding to the predetermined area and configured to detect the object in the predetermined area, the object detection method comprising:
a first step of acquiring, by an information processing apparatus, the detection results of the sensor units;
a second step of determining, by the information processing apparatus, whether the number of the sensor units whose detection results coincide with each other exceeds a majority of all the sensor units; and
a third step of determining, when the information processing apparatus determines in the second step that the number of the sensor units whose detection results coincide with each other exceeds a majority of the sensor units being active, whether the object is present in the predetermined area, based on the detection results of the sensor units that exceed the majority.
